# EUROPÄISCHE PATENTANMELDUNG

(11) **EP 3 453 486 A1**
(43) Veröffentlichungstag der Anmeldung: **13.03.2019**
(21) Anmeldenummer: 18192038.0
(22) Anmeldetag: 31.08.2018
(51) Int. Cl.: B23Q 17/09, G05B 19/4065

(54) **VORRICHTUNG ZUM BEARBEITEN EINES WERKSTÜCKS MIT EINEM WERKZEUG**

(30) Priorität: 07.09.2017 DE 102017120570
(71) Anmelder: Liebherr-Verzahntechnik GmbH, 87437 Kempten (DE)
(72) Erfinder: Schwarzmann, Martin, 87435 Kempten (DE)
(74) Vertreter: Laufhütte, Dieter

(57) **Zusammenfassung**

Die Erfindung betrifft eine Vorrichtung zum Bearbeiten eines Werkstücks (2) mit einem Werkzeug (3), das eine Werkzeugaufnahme (4) zum lösbaren Einspannen eines Werkzeugs (3), insbesondere eines Wälzschälrads, und einen Bearbeitungskopf (5) umfasst, der mit der Werkzeugaufnahme (4) versehen ist und dazu ausgelegt ist, ein darin eingespanntes Werkzeug (3) anzutreiben und gegenüber einem zu bearbeitenden Werkstück (2) zu bewegen, gekennzeichnet durch eine Auswerteeinheit zum Abbilden und/oder Vermessen eines Werkzeugs (3) oder eines Teils davon, um den Verschleißzustand des Werkzeugs (3) zu erfassen.

## Beschreibung

Die vorliegende Erfindung betrifft eine Vorrichtung zum Bearbeiten eines Werkstücks mit einem Werkzeug, insbesondere eine Bearbeitungsmaschine zur Verzahnbearbeitung.

Mit einer solchen Werkzeugmaschine ist es möglich, auf effektive Art und Weise ein Werkstück zu bearbeiten, insbesondere eine Verzahnung an einem Werkstück zu erzeugen. Dabei wird mit Hilfe eines spanabhebenden Verfahrens die Bearbeitung durchgeführt.

Bei jeder Zerspanung, so auch beim der Verzahnbearbeitung , treten aufgrund der hohen thermischen und mechanischen Belastungen des Werkzeugs Verschleißerscheinungen auf, die eine Abnutzung des Werkzeugs bzw. seiner Schneidkanten bedingen. Maßgebliche Einflussfaktoren auf die Form und Größe des Verschleißes sind dabei die Beschaffenheit des Werkzeugs, der zu zerspanende Werkstoff selbst sowie die entsprechenden Prozessparameter .Dabei ist esfür die Qualität des mit dem Werkzeug bearbeiteten Werkstücks wichtig, das Werzeug aus dem Prozess zu nehmen, bevor der Werkzeugverschleiß zu großen Einfluss auf das Bearbeitungsergebnis hat und es zu Toleranzüberschreitungen kommt. Als Verschleiß wird dabei mitunter die Formänderung der Schneidkante und der Schneidfläche des Werkzeugs verstanden. Unter anderem hängt das Ausmaß des Verschleißes auch von der Härte, der Abriebfestigkeit, der Warmfestigkeit, der Zähigkeit des Werkstücks und des Schneidstücks ab, wird aber auch von der Oberflächenbeschaffenheit der Schneide, dem Reibwert und von der Schmierwirkung eines verwendeten Schneidöls bestimmt.

Um also die Fertigung von Werkstücken mit einem zu stark verschlissenen Werkzeug zu verhindern bzw. einen Werkzeugbruch zu vermeiden, wird im Stand der Technik nach einer empirisch festgelegten Standmenge des Werkzeugs ein Austausch vorgenommen, um Ausfallzeiten einer Bearbeitungsmaschine und die Produktion von Ausschuss möglichst gering zu halten. Dabei kann vorzugsweise auf eine Verschleißmarkenbreite abgestellt werden, die den annähernd gleichmäßigen Abtrag des Schneidstoffs durch Reibung an der oder den Werkzeugflanken darstellt. Dabei wird die Verschleißmarkenbreite immer parallel zur Schneidkante gemessen. So wird im Stand der Technik beispielsweise ein Werkzeug getauscht, wenn die Verschleißmarkenbreite nach einer empirischen Schätzung mit einer gewissen Wahrscheinlichkeit einen Schwellenwert für eine Verschleißmarkenbreite überschreitet. Hierbei ist es wichtig einen optimalen Zeitpunkt zu treffen an dem die Größe der Verschleißmarken und die Nachschliffbeträge für das Werkzeug ein Optimum erreichen unter gleichzeitiger Berücksichtigung der zu erzielenden Bearbeitungsqualität. Alternativ kann auch der Austausch von Schneidelementen, wie beispielsweise Schneidplatten oder Wendeschneidplatten in Abhängigkeit von Bearbeitungsqualität und Werkzeugkosten optimiert werden.

Zudem ist es nachteilhaft, wenn sich Prozesse zur Verschleißüberwachung erst durch einen vorausgehenden Lernvorgang langsam an einen vernünftigen Wechselzeitpunkt des Werkzeugs herantasten, wie das bei manch lernenden Verschleißüberwachungsprozessen der Fall ist. Die in der Zwischenzeit anfallenden Ausschüsse können einen beträchtlichen wirtschaftlichen Nachteil darstellen und bereits kleinste Änderungen in der Bearbeitung führen zu oftmals nicht vorhersehbaren Änderungen im Verschleißverhalten, so dass die "Lernkurve" sich erneut an einen akzeptablen Wert annähern muss.

Es ist daher das Ziel der vorliegenden Erfindung eine Vorrichtung bzw. ein Verfahren zu schaffen, das den vorstehend aufgeführten Nachteil überwindet und einen Austausch eines Werkzeugs zu genau dem richtigen Zeitpunkt unabhängig von der bereits gelaufenen Standzeit vorsieht. Dies ist für die Effizienz der beanspruchten Vorrichtung von Vorteil und sorgt für eine gleichbleibend hohe Qualität des bearbeiteten Werkstücks.

Die erfindungsgemäße Vorrichtung bietet weiterhin eine Möglichkeit zur Dokumentation des Verschleißverhaltens am Werkzeug, um so den Verschleißverlauf über der Standzeit zu dokumentieren. Damit lassen sich Rückschlüsse auf geeignete Nachschleifzeitpunkte ziehen, oder auch verschiedene Werkzeugmaterialen, Beschichtungen oder Werkzeugchargen miteinander vergleichen.

Die vorliegenden Nachteile werden mit Hilfe einer Vorrichtung, die sämtliche Merkmale des Anspruchs 1 aufweist, überwunden. Eine solche Vorrichtung umfasst eine Werkzeugaufnahme zum lösbaren Einspannen eines Werkzeugs, insbesondere zum Einspannen eines Wälzschälrads, einen Bearbeitungskopf, der mit der Werkzeugaufnahme versehen ist und dazu ausgelegt ist, ein darin eingespanntes Werkzeug anzutreiben und gegenüber einem zu bearbeitenden Werkstück zu bewegen, sowie eine Auswerteeinrichtung mit einer Einrichtung zum Abbilden eines Werkzeugs oder eines Teils davon, um den Verschleißzustand des Werkzeugs zu erfassen.

Durch das Abbilden des Werkzeugs mit Hilfe der Auswerteeinrichtung, die eine Optikeinheit, ein optisches Messsystem und/oder einen Messtaster umfassen kann, bzw. durch das Abbilden eines Teils davon und dem Erfassen des Verschleißzustands kann unabhängig von einer Standzeit des Werkzeugs ein Austausch oder ein notwendiges Nachschleifen vorgenommen werden sowie weiterhin der notwendige Nachschliffbetrag festgelegt werden. Es ist nun nicht mehr notwendig, den Verschleiß eines Werkzeugs auf Grundlage von empirischen Studien anzunehmen, die von der Standzeit des Werkzeugs abhängen, sondern es kann je nach tatsächlichem Verschleiß ein Austausch oder ein Nachschleifen des Werkzeugs erfolgen. Dies hat den Vorteil, dass jedes Werkzeug seine maximale Standzeit hinsichtlich des Verschleißes ausnutzt ohne erst Erfahrungswerte aufbauen zu müssen. Es ist dabei nicht erforderlich bestimmte Sicherheitszonen oder -werte zu berücksichtigen, so dass der gewünschte Verschleißpunkt damit sehr genau bestimmbar ist

So kann vorgesehen sein, dass eine vergrößerte Darstellung einer Schneidkante oder mehrerer Schneidkanten eines Werkzeugs einem Bediener der Vorrichtung angezeigt werden, woraufhin dieser den Verschleißzustand in einfacher Art und Weise beurteilen kann und gegebenenfalls entsprechend reagieren kann. Vorteilhaft hierbei ist, dass der Bediener den Werkzeugverschleiß auch an einem von der Vorrichtung fernen Ort begutachten kann und sich nicht extra zur Vorrichtung begeben muss, um eine Inaugenscheinnahme des Werkzeugs vorzunehmen. Teilweise ist die Zugänglichkeit des Werkzeuges bzw. der Werkzeugschneide, z.B. bei hängendem Einbau, nur erschwert möglich oder die Lichtsituation im Arbeitsraum erschwert eine qualifizierte Betrachtung des Werkzeugs bei unterschiedlichen Lichtverhältnissen. In der erfindungsgemäßen Vorrichtung kann die Auswerteeinrichtung bzw. eine geeignete Messeinrichtung entsprechend klein ausgeführt sein und bedarfsweise durch eine geeignete Beleuchtungseinrichtung unterstützt werden, um so eine reprouzierbare, gleichmäßige Belichtungssituation zu gewährleisten.
Nach einer optionalen Fortbildung der Erfindung ist demnach die Auswerteeinrichtung dazu ausgelegt, mindestens eine von mehreren Schneidkanten des Werkzeugs abzubilden, vorzugsweise in einer vergrößerten Darstellung, sodass ein guter Überblick über den tatsächlichen Verschleißzustand des Werkzeugs erhalten werden kann. Dabei kann die Auswerteeinrichtung neben einer Optikeinheit, wie z.B. einer Kamera, auch optische oder mechanische Messeinrichtungen umfassen, die zur Verschleißdokumentation eingesetzt werden.

Dabei ist es nicht unbedingt erforderlich, dass sämtliche Schneidzähne bzw. Schneidkanten eines Werkzeugs durch die Auswerteeinrichtung abgebildet oder abgetastet werden, sondern es reicht für die Zwecke der Erfindung aus, wenn eine vorher bestimmte Anzahl von Schneiden bzw. Schneidkanten abgebildet wird, bspw. nur jede zweite oder dritte Schneide oder Schneidkante.

Dabei kann auch vorgesehen sein, dass die beanspruchte Erfindung mit einer Anzeigeeinheit versehen ist, um die von der Optikeinheit erzeugte Abbildung anzuzeigen, entsprechende Kennwerte für die Verschleißmarkenbreiten auszugeben oder auch den Verschleißverlauf zu dokumentieren.

Nach einer Fortbildung der vorliegenden Erfindung weist die Vorrichtung ferner eine Speichereinheit auf, um die von dem Werkzeug erstellte Abbildung sowie vorzugsweise damit in Verbindung stehende weitere Informationen abzuspeichern. Durch das Abspeichern der Abbildungen können diese jederzeit wieder aufgerufen werden. Werden demnach innerhalb des Werkzeuglebenszyklus immer die gleichen Werkstücke mit dem gleichen Werkzeug bearbeitet, dann ist es möglich, dass diese Bilder Aufschlüsse über das Standzeitverhalten zwischen den jeweiligen Werkzeugaufbereitungen (bspw. ein Nachschleifen) geben.

Zusätzlich zur Verschleißdokumentation können weitere Bearbeitungsinformationen gespeichert werden. Durch die Aufzeichung der bisherigen Standzeit des Werkzeugs, von Motor- oder Regelparameter der an der Bearbeitung beteiligten Maschinenachsen kann eine Korrelation zwischen dem Bearbeitungsergebnis, dem Verschleiß und von Parametern der Werkzeugmaschine gebildet werden, welche Rückschlüsse auf den Bearbeitungprozess ermöglichen und die so zu Zwecken der Prozessoptimierung herangezogen werden kann.Mögliche Parameter sind dabei vorzugsweise die Stromaufnahme, oder Leistungsaufnahme, der Spannungsverlauf und/oder ein Soll-Istvergleich der NC_Achspositionen, teilweise als Schleppabstand bezeichnet.

Nach einer weiteren optionalen Modifikation der vorliegenden Erfindung ist die Auswerteeinrichtung zur Verschleißdokumentation eine Optikeinheit wie eine Kamera, insbesondere eine Mikroskopkamera, ein Laserscanner, aber auch eine mechanischen Messeinrichtung mit der die Verschleißmarke abgetastet wird. Nutzt man einen Laserscanner als Optikeinheit, werden die entsprechenden Versatze der Linien des Laserscanners erfasst und daraus der Verschleißzustand der Kante ermittelt. Bei Nutzung einer Kamera ist der Verschleißzustand anhand der Kantengüte einer abgebildeten Schneidkante des Werkzeugs zu erkennen. Über eine manuelle Fokusfunktion, bevorzugt aber eine Autofokusfunktion und Messung in verschiedenen Schärfeebenen kann beispielsweise die Verschleißmarkentiefe gemessen werden. So kann durch Bestimmung des optischen Abstandes an dem in bestimmten Schärfeebenen Teile des Werzeuges scharf gezeichnet werden, ein Rückschluss auf die Verschleißmarkenbreite/-tiefe gezogen werden. Ferner kann über Schärfeebenen und die Maschinen-NC-Achsen die optische Einheit zum Werkzeug zugestellt werden und so ebenfalls ein Wert für die Verschleißgröße bestimmt werden.

Weiterhin kann nach der Erfindung vorgesehen sein, dass die Auswerteeinrichtung an einer separaten Bewegungsvorrichtung angeordnet ist, die eine Relativbewegung gegenüber einem ruhenden Werkzeug ermöglicht. Sind sowohl das zu untersuchende Werkzeug als auch die Auswerteeinrichtung am Ständer einer Werkzeugmaschine angeordnet, können bestimmte Bewegungen der Auswerteeinrichtung gegenüber dem Werkzeug nicht ausgeführt werden. In einer solchen Situation ist es notwendig, die Auswerteeinrichtung mit einer Bewegungsvorrichtung zu versehen, damit die Auswerteeinrichtung in die entsprechenden Aufnahmepositionen gegenüber dem Werkzeug verfahren werden kann.

Nach der Erfindung kann weiter vorgesehen sein, dass die Vorrichtung einen halb- oder vollautomatischen Werkzeugwechsler umfasst, der dazu ausgelegt ist, ein in der Werkzeugaufnahme befindliches Werkzeug aufzunehmen und ein anderes Werkzeug in die Werkzeugaufnahme einzuspannen, wobei die Auswerteeinrichtung dazu ausgelegt ist, dass durch den Werkzeugwechsel aufgenommene Werkzeug oder einen Teil davon abzubilden und wobei vorzugsweise die Auswerteeinrichtung an dem Werkzeugwechsler angeordnet ist.

Bei Werkzeugmaschinen ist es üblich, das Werkzeug mit Hilfe eines Werkzeugwechslers zu wechseln. Bei Verzahnmaschinen, vorzugsweise im Großserieneinsatz kann ebenfalls ein Werkzeugwechsler zum Einsatz kommen. Dadurch entfällt der händische Wechselvorgang des Werkzeugs, womit die Effizienz einer solchen Maschine gesteigert werden kann. So ist es für die Erfindung besonders vorteilhaft, wenn die Auswerteeinrichtung in einer solchen Wechselvorrichtung angeordnet ist, sodass der Vorgang zum Abbilden des Werkzeugs, mit dem eine Bearbeitung eines Werkstücks vorgenommen worden ist, nicht zu einem unnötigen Unterbrechen eines Arbeitsvorgangs der Werkzeugmaschine führt.

So kann vorgesehen sein, dass der Werkzeugwechsler das Werkzeug nach einem Bearbeiten eines Werkstücks aufnimmt und vor oder nach einem Ablegen in einem Werkzeugmagazin durch die Auswerteeinrichtung untersucht wird. Dabei können die am Werkzeugwechsler bereits vorhandenen Bewegungsvorrichtungen genutzt werden, um das zu untersuchende Werkzeug in einen Bereich zu verfahren oder in einem Bereich zu halten, in dem die Auswerteeinrichtung eine Abbildung des Werkzeugs vornehmen kann. Auch hier kann bei Bedarf vorgesehen sein, dass die Auswerteeinrichtung mit einer Bewegungsvorrichtung versehen ist, die eine Relativbewegung der Auswerteeinrichtung gegenüber dem vom Werkzeugwechsler aufgenommenen Werkzeug ermöglicht.

Weiter kann dabei vorgesehen sein, dass das Werkzeug während dem Vermessen und Dokumentieren der Verschleißmarken durch die Auswerteeinrichtung in einer drehbaren Aufnahme eingespannt ist. So kann bei einem gleichbleibenden Aufnahmebereich der Auswerteeinrichtung durch Rotieren des Werkzeugs eine benachbarte Schneidkante in den Aufnahmebereich der Auswerteeinrichtung rotiert werden, ohne dass ein Bewegen der Auswerteeinrichtung oder ein Umstellen der Abbildungseinstellungen der Auswerteeinrichtung erforderlich ist. Dies sorgt für eine besonders schnelle Erzeugung einer Abbildungsserien, die mehrere Teilbereiche des Werkzeugs zum Gegenstand hat.

Vorzugsweise ist die erfindungsgemäße Vorrichtung eine Verzahnmaschine, wie bspw. eine Wälzschälmaschine. Die Verzahnmaschine ist dazu ausgelegt, mit einem Werkzeug, insbesondere ein Wälzschälrad eine Verzahnung in einem Werkstück zu erzeugen oder zu definieren.

Bei Verzahnmaschinen hängt die Qualität der Erzeugung einer Verzahnung u.a. von dem einwandfreien Zustand der Qualität der Schneidkanten des Werkzeugs ab. Von daher ist es insbesondere bei solchen Verzahnmaschinen von Vorteil, wenn das Werkzeug nicht vor seinem optimalen Verschleißpunkt und auch nicht nach seinem optimalen Verschleißpunkt getauscht wird. Nur so lässt sich ein besonders effektiver und wirtschaftlicher Betrieb einer Verzahnmaschine gewährleisten.

Nach einer vorteilhaften Ausführung der Erfindung umfasst die Auswerteeinheit einen Messtaster, und/oder umfasst ein Messtaster als auch eine Kamera oder einen Laserscanner.

Nach einer weiteren optionalen Modifikation der vorliegenden Erfindung umfasst die beanspruchte Vorrichtung ferner eine Rechnereinheit zum Bearbeiten der von der Auswerteeinrichtung erzeugten Abbildung und Messergebnisse sowie zum Darstellen und/oder Hervorheben des Verschleißzustands des abgebildeten Werkzeugs, wobei die Rechnereinheit neben der Darstellung des Verschleißzustandes vorzugsweise auch dazu ausgelegt ist, in der Abbildung eine Verschleißgrenze einer Schneidkante darzustellen, um bei einer Betrachtung der Abbildung den aktuellen Verschleißgrad des Werkzeugs in einfacher Weise erkennen zu können.

Dadurch ist eine einfache optische Prüfung des Werkzeugs möglich, bei der ein Beobachter der Abbildung die Entscheidung zur weiteren Nutzung des Werkzeugs aufgrund des dargestellten oder des hervorgehobenen Verschleißzustands in der Abbildung auf einfache Art und Weise entscheiden kann. So kann beispielsweise bei der Abbildung einer Schneidkante des Werkzeugs eine Linie in die Abbildung eingesetzt werden, die ein gerade noch akzeptables Maß eines Abtrags der Schneidkante darstellt. Ist die Schneidkante hingegen hinter einer solchen Linie, da der Verschleißzustand dementsprechend schlecht ist, erkennt der Betrachter der so modifizierten Abbildung sofort, dass ein Austausch oder ein Nachschleifen des Werkzeugs sinnvoll und notwendig ist.

Die Erfindung umfasst ferner ein Verfahren zur Erkennung eines Werkzeugverschleißes in einer Vorrichtung nach einer der vorstehend aufgeführten Varianten, wobei in dem Verfahren nach einem Bearbeiten eines Werkstücks mit einem Werkzeug die Auswerteeinrichtung eine Abbildung des Werkzeugverschleiss erstellt, insbesondere von einer Schneidkante des Werkzeugs und die Abbildung über eine Anzeigeeinheit wiedergegeben wird. Dadurch wird es einem Betrachter ermöglicht ohne tatsächliche physische Präsenz an der Vorrichtung den Verschleißzustand des Werkzeugs zu beurteilen. Der Wechsel eines Werkzeugs wird demnach nicht länger aufgrund empirischer Kriterien vorgenommen.

In dem Verfahren ist ferner möglich, dass eine durch die Optikeinheit erzeugte Abbildung in einer Speichereinheit gespeichert wird, um sie zu einem späteren Zeitpunkt abrufen zu können. Werden innerhalb des Werkzeuglebenszyklus immer die gleichen Werkstücke mit dem gleichen Werkzeug bearbeitet, dann können diese Bilder auch Aufschlüsse über das Standzeitverhalten zwischen den jeweiligen Werkzeugaufbereitungen (bspw. Nachschleifen des Werkzeugs), Beschichtungsvarianten, Werkzeug- und Werkstückchargen geben.

Nach einer weiteren optionalen Modifikation des Verfahrens macht die Optikeinheit beim Abbildevorgang des Werkzeugs Aufnahmen aus mehreren Perspektiven, insbesondere Aufnahmen aus verschiedenen Blickrichtungen auf eine Schneide des Werkzeugs, um eine bessere Beurteilung des Verschleißgrads des Werkzeugs zu ermöglichen. Dazu kann die Optikeinheit mit einer Bewegungsvorrichtung bewegt werden bzw. aus mehreren Kameraeinrichtungen mit unterschiedlicher Ausrichtung bestehen.

Insbesondere bei einem Treppenschliff ist dies von Vorteil, da man hier einen dreidimensionalen Eindruck gewinnen möchte, um den Zustand des Treppenschliffs zu erfassen.

Vorzugsweise werden die gespeicherten Abbildungen eines Werkzeugs und die damit in Verbindung stehenden weiteren Informationen, wie Aufnahmezeitpunkt, aus der Abbildung abgeleitete Verschleißinformationen, die Standzeit des Werkzeugs und/oder Motor- und Regelparameter der Maschinenachsen mit Hilfe von statistischen Verfahren ausgewertet, um Rückschlüsse auf das Maschinenverhalten und das Werkstoffverhalten des eingesetzten Werkzeugs zu erhalten. Die hier auftretenden Korrelationen in den abgespeicherten Informationen, bzw. in den systematischen Veränderungen der Motorparameter erlauben zudem Rückschlüsse auf das eingesetzte Werkstoffverhalten.

Ferner kann nach einer Ausführungsform der vorliegenden Erfindung auf Grundlage der Abbildung eines Werkzeugs auf deren Verschleißzustand geschlossen werden, vorzugsweise mit Hilfe einer Rechnereinheit, wobei in Abhängigkeit davon automatisch durch die Rechnereinheit ein Nachschleifen oder ein Austausch des Werkzeugs durch einen Werkzeugwechsler veranlasst wird.

Der Tausch oder das Nachschleifen des Werkzeugs wird demnach auf Grundlage einer Auswertung der durch die Optikeinheit erzeugten Abbildung vorgenommen. Die Auswertung erfolgt dabei vorzugsweise mittels einer Rechnereinheit.

Nach einer weiteren vorteilhaften Modifikation der Erfindung ist die Auswerteeinheit dazu ausgelegt eine automatische Bildverarbeitung, insbesondere Bilderkennung vorzugsweise im Rahmen einer Mustererkennung, durchzuführen. Damit ist es möglich, den Verschleißzustand automatisch aus einem Bild zu ermitteln. Es ist daher nicht mehr nötig, wie bisher aufgeführt, dass ein Betrachter sich das Bild anschauen muss, um den Verschleißzustand zu beurteilen. Als Muster kann bspw. ein typischer Verlauf eines Verschleißes gesucht und erkannt werden, sowie der Verlauf der Schneidkante. Aktuelle Kamerasysteme oder optische Messysteme mit geeigneter Software können anhand von Bilddaten z.B. einer Punktewolke den Verlauf der Schneidkante detektieren. Wenn man diese Messung im Vergleich zur Werkzeugkante am Neuwerkzeug durchführt, können am Werkzeug virtuelle Bereiche definiert werden (einer oder mehrere parallele Bereiche zu der Schneidkante (ähnlich dem Verlauf von Höhenlinien in Karten), bei deren Überschreitung das Werkzeug als verschlissen beurteilt wird. Vorzugsweise ist vorgesehen, dass der Maschinenbediener noch eingreifen kann, um das Werkzeug für eine weitere Nutzung freizugeben bis ein weiterer Verschleißbereich überschritten wurde. Alternativ dazu kann das Werkzeug auch herausgenommen und zur Wiederaufbereitung gesandt werden.

Das Herausnehmen des Werkzeugs kann dabei vollautomatisch ohne Einbindung eines Maschinenbedieners durchgeführt werden. Die Maschine kann demnach also vollautomatisch das Werkzeug auswechseln, wenn es verschlissen ist und/oder die Entwicklung des Verschleißes dokumentieren. So kann dann auch der Verlauf des Verschleißes über das Profil automatisch erfasst werden. Die so ausgestaltete Auswerteeinheit weist also Funktionalitäten auf, die über eine Bildbearbeitung zur Unterstützung des Maschinenbedieners hinausgehen, da nun durch Bildverarbeitung und eine entsprechende Logik automatisch durch die Auswerteeinheit entschieden werden kann, wann ein Verschleißzustand vorliegt und Werkzeugwechsel vorzunehmen ist. Die Auswerteeinheit kann für das Ausführen der Bildverarbeitung von einer Rechnereinheit unterstützt werden, die die entsprechenden Schritte der Bildverarbeitung ausführt.

Weitere Vorteile, Merkmale und Einzelheiten der Erfindung werden anhand der nachfolgenden Figurenbeschreibung ersichtlich.

Dabei zeigen:
- Fig. 1:: eine Perspektivansicht einer Verzahnmaschine mit einem Werkzeugwechsler nach der vorliegenden Erfindung,
- Fig. 2:: eine vergrößerte Darstellung des Werkzeugwechslers mit der Auswerteeinrichtung der Erfindung,
- Fig. 3:: eine Seitenansicht des Werzeugwechslers mit der Auswerteeinrichtung nach der Erfindung, und
- Fig. 4:: durch eine Auswerteeinrichtung, hier eine Optikeinheit, aufgenommene Abbildungsbeispiele, die einen unterschiedlichen Verschleißzustand einer Schneidkante eines Wälzzählrads zeigen.

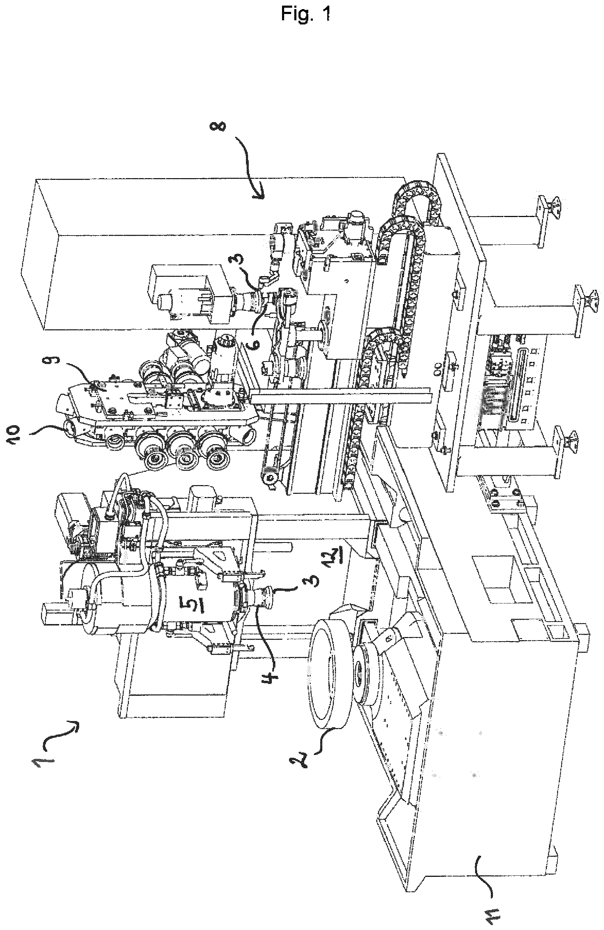

Fig. 1 zeigt eine Perspektivdarstellung einer Verzahnmaschine 1 und eines dazu benachbart angeordneten Werkzeugwechslers 8. Die Verzahnmaschine 1 weist ein Maschinenbett 11 auf, an dem die bekannten Elemente einer Verzahnmaschine 1 angeordnet sind. Von dem Maschinenbett 11 erstreckt sich in vertikaler Richtung der Ständer 12, der gegenüber dem Maschinenbett 11 in einer Achsrichtung verschiebbar ist. An dem Ständer ist über eine weitere Bewegungsvorrichtung der Bearbeitungskopf 5 angeordnet, der an seiner Spindelachse eine Werkzeugaufnahme 4 zum Einspannen eines Werkzeugs 3 besitzt. Mittels der Bewegbarkeit des Ständers 12 sowie der Bewegbarkeit des Bearbeitungskopfs ist es möglich das Werkzeug 3 an eine beliebige Position gegenüber dem Werkstück 2 zuzustellen. Das Werkstück 2 ist dabei um eine Spindelachse antreibbar.

Da der Fachmann die Wirkungsweise und die Funktionsfähigkeit einer Verzahnmaschine 1 kennt, wird auf eine detaillierte Beschreibung verzichtet.

Neben der Verzahnmaschine 1 ist ein Werkzeugwechsler 8 angeordnet, der dazu in der Lage ist, das Werkzeug 3 von der Werkzeugaufnahme 4 automatisch oder halbautomatisch zu wechseln. Hierzu wird das Werkzeug 3 aus der Werkzeugaufnahme entnommen und mit Hilfe einer Bewegungsvorrichtung einem Werkzeugmagazin 9 zugeführt. Nach der Erfindung ist nun vorgesehen, dass auf dem Weg zum Werkzeugmagazin 9 der Verschleißzustand des Werkzeugs 3 mittels der Optikeinheit 6 erfasst wird. Nach Abschluss dieses Vorgangs wird dann das benutzte Werkzeug 3 dem Werkzeugmagazin 9 zugeführt, indem es in einen dafür vorgesehen Werkzeughalter 10 eingesteckt wird.

Somit ist es möglich, den Verschleißzustand der in dem Werkzeugmagazin 9 befindlichen Werkzeuge 3 abzuschätzen und zu beurteilen, wann ein Nachschleifen oder ein Austauschen des Werkzeugs 3 notwendig ist. Es ist nicht nötig, auf eine empirische Standzeit zu vertrauen, die oftmals nicht den optimalen Zeitpunkt zum Wechsel oder zum Nachschleifen des Werkzeugs trifft. Vielmehr wird zur Beurteilung des Verschleißzustands der tatsächliche Verschleiß des Werkzeugs 3 anhand der Verschleißaufzeichnung einer Auswerteeinrichtung beurteilt. Die Beurteilung kann dabei auch mittels einer Rechnereinheit vorgenommen werden.

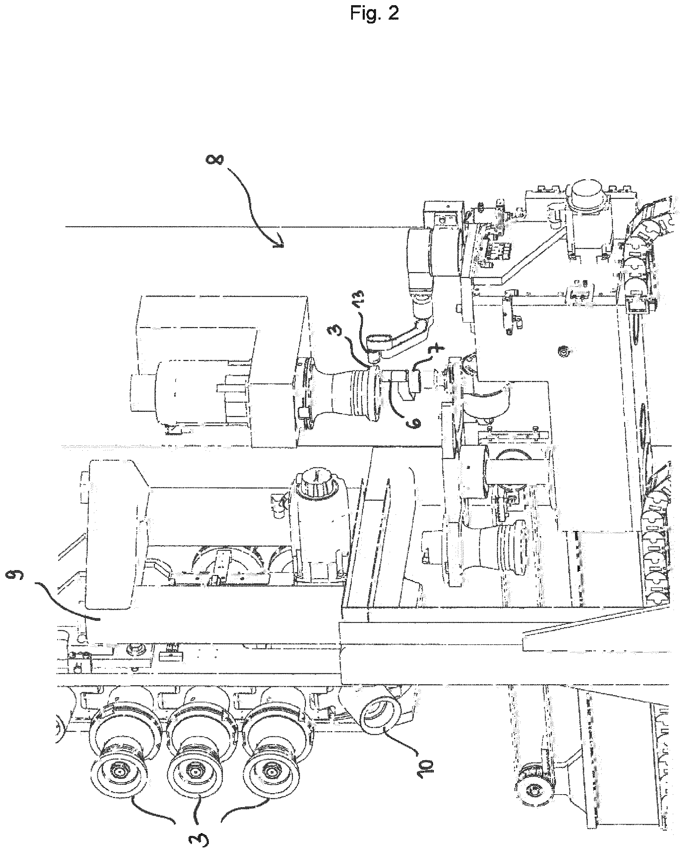

Fig. 2 zeigt einen vergrößerten Ausschnitt des Werkzeugwechslers 8, in dem man die Auswerteeinrichtung, die hier als Optikeinheit 6 ausgeführt ist, besser erkennen kann. Man sieht ein Werkzeug 3 auf dem Weg in Richtung Werkzeugmagazin 9, das von der Optikeinheit 6, die über eine Bewegungsvorrichtung 7 verfügt, untersucht wird. Weiter sieht man einen Messtaster, der dazu ausgelegt ist, mit einer kleinen Kugel über eine Schneidkante des Werkzeugs 3 zu fahren und dadurch abtastet, ob schon ein zu großer Verschleiß erfolgt ist. Dieser Vorgang durch den Messtaster 13 kann aufgrund der von der Optikeinheit 6 aufgenommenen Abbildung ausgelöst werden. Beispielsweise wird, wenn die Optikeinheit 6 als eine Bildaufzeichungseinheit ausgeführt ist und diese einen Verschleiß des Werkzeugs 3 in einen kritischen Bereich erkennt, für eine exakte Bestimmung des Verschleißes der Messtaster 13 hinzugezogen. Alternativ kann die Optikeinheit (6) auch als Laserscanner ausgeführt sein und so direkt die Verschleißgröße dokumentieren.

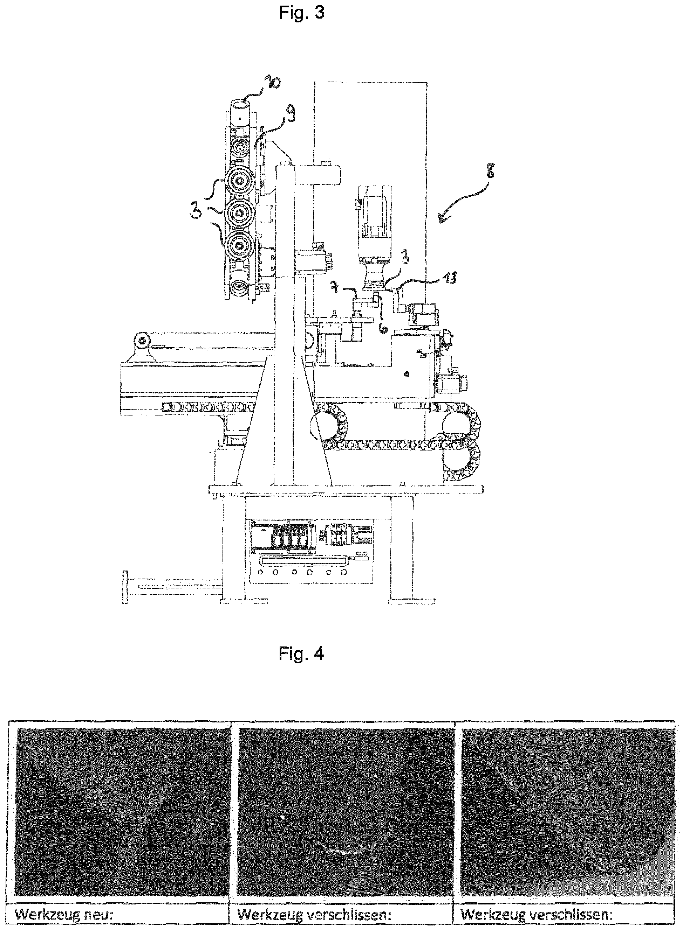

Fig. 3 ist eine Seitenansicht des in Fig. 2 dargestellten Ausschnitts des Werkzeugswechslers 8. Auch hier erkennt man, dass die Optikeinheit 6 mit Hilfe der Bewegungsvorrichtung 7 in eine entsprechende Position zur Abbildungsaufnahme des Werkzeugs 3 bzw. eines Teils des Werkzeugs 3 verfahrbar ist. Mitunter kann es für das saubere Erfassen des Verschleißzustands des Werkzeugs 3 auch notwendig sein, mehrere Abbildungen aus verschiedenen Positionen desselben Werkzeugs zu machen. Dabei kann das zu untersuchende Werkzeug auch in einer rotierbaren Halterung aufgenommen sein, um ein die Schneidkanten des Werkzeugs rasch in einen Abbildungsbereich verdrehen zu können.

Fig. 4 zeigt eine Schneidkante eines Werkzeugs bei verschiedenen Verschleißzuständen. Auf der linken Seite der insgesamt drei Darstellungen umfassenden Fig. 4 erkennt man die Schneidkante eines Werkzeugs, die neu bzw. frisch nachgeschliffen ist. Die mittige Abbildung zeigt die Schneidkante eines Werkzeugs, die einen Verschleiß aufweist. Auch die rechte der drei Abbildungen zeigt ein verschlissenes Werkzeug. Zu erkennen ist dies an der Schneidkantenabrundung sowie dem Flankenverschleiß, deren Spitzenbereich der Schneidkante eine Hohlkehle aufweist.

## Patentansprüche

1. Vorrichtung (1) zum Bearbeiten eines Werkstücks (2) mit einem Werkzeug (3), umfassend:
eine Werkzeugaufnahme (4) zum lösbaren Einspannen eines Werkzeugs (3), insbesondere eines Wälzschälrads, und
einen Bearbeitungskopf (5), der mit der Werkzeugaufnahme (4) versehen ist und dazu ausgelegt ist, ein darin eingespanntes Werkzeug (3) anzutreiben und gegenüber einem zu bearbeitenden Werkstück (2) zu bewegen,
**gekennzeichnet durch**
eine Auswerteeinheit zum Abbilden und/oder Vermessen eines Werkzeugs (3) oder eines Teils davon, um den Verschleißzustand des Werkzeugs (3) zu erfassen.

2. Vorrichtung (1) nach Anspruch 1, wobei die mindestens eine Auswerteeinheit dazu ausgelegt ist, mindestens eine von mehreren Schneidkanten des Werkzeugs (3) abzubilden, vorzugsweise in einer vergrößerten Darstellung.

3. Vorrichtung (1) nach einem der vorhergehenden Ansprüche, ferner mit einer Anzeigeeinheit, um die von der Auswerteeinheit erzeugte Abbildung anzuzeigen.

4. Vorrichtung (1) nach einem der vorhergehenden Ansprüche, ferner mit einer Speichereinheit, um die von dem Werkzeug (3) erstellte Abbildung sowie vorzugsweise damit in Verbindung stehende weitere Informationen abzuspeichern.

5. Vorrichtung (1) nach Anspruch 4, wobei die weiteren Informationen der Aufnahmezeitpunkt, aus der Abbildung abgeleitete Verschleißinformationen, die Standzeit des Werkzeugs (3) und/oder Motor- und Regelparameter des Bearbeitungskopf (5) bei einer der Abbildung vorausgehenden Bearbeitung eines Werkzeugs (3) sind, wobei die Motor- und Regelparameter vorzugsweise eine Stromaufnahme, eine Leistungsaufnahme, eine Spannungsaufnahme und/oder ein Schleppabstand sind.

6. Vorrichtung (1) nach einem der vorhergehenden Ansprüche, wobei die Auswerteeinheit eine Kamera, insbesondere eine Mikroskop-Kamera, und/oder ein Laserscanner ist.

7. Vorrichtung (1) nach einem der vorhergehenden Ansprüche, wobei die Auswerteeinheit an einer Bewegungsvorrichtung (7) angeordnet ist, die eine Relativbewegung gegenüber einem ruhenden Werkzeug (3) ermöglicht.

8. Vorrichtung (1) nach einem der vorhergehenden Ansprüche, ferner mit
einem halb- oder vollautomatischen Werkzeugwechsler (8), der dazu ausgelegt ist, ein in der Werkzeugaufnahme (4) befindliches Werkzeug (3) aufzunehmen und ein anderes Werkzeug (3) in die Werkzeugaufnahme (4) einzuspannen, wobei
die Auswerteeinheit dazu ausgelegt ist, das durch den Werkzeugwechsler (8) aufgenommene Werkzeug (3) oder einen Teil davon abzubilden, und vorzugsweise
die Auswerteeinheit an dem Werkzeugwechsler (8) angeordnet ist.

9. Vorrichtung (1) nach einem der vorhergehenden Ansprüche, wobei die Auswerteeinheit ein Messtaster ist, und/oder die Auswerteeinheit sowohl einen Messtaster als auch eine Kamera oder einen Laserscanner umfasst.

10. Vorrichtung (1) nach einem der vorhergehenden Ansprüche, ferner umfassend eine Rechnereinheit zum Bearbeiten des von der Auswerteeinheit erzeugten Verschleißabbilds und zum Darstellen und/oder Hervorheben des Verschleißzustands des abgebildeten Werkzeugs (3), wobei die Rechnereinheit vorzugsweise dazu ausgelegt ist, in der Abbildung eine Verschleißgrenze einer Schneidkante darzustellen, um bei einer Betrachtung der Abbildung den aktuellen Verschleißgrad des Werkzeugs (3) in einfacher Weise erkennen zu können.

11. Vorrichtung (1) nach einem der vorhergehenden Ansprüche, wobei die Auswerteeinheit ferner dazu ausgelegt ist, eine Bildverarbeitung, insbesondere eine Bilderkennung im Rahmen einer Mustererkennung durchzuführen, um den Verschleißzustand des Werkzeugs aus einer Abbildung des Werkzeugs automatisch zu erkennen, wobei vorzugsweise als Muster typische Verschleißverläufe des Werkzeugs als Bilder hinterlegt sind und die Auswerteeinheit dazu ausgelegt ist, nach Übereinstimmungen hierzu in der Abbildung des Werkzeugs zu suchen.

12. Verfahren zur Erkennung eines Werkzeugverschleißes in einer Vorrichtung (1) nach einem der vorhergehenden Ansprüche, wobei in dem Verfahren:
nach einem Bearbeiten eines Werkstücks (2) mit einem Werkzeug (3) die Auswerteeinheit eine Abbildung des Werkzeugs (3) erstellt, insbesondere von einer Schneidkante des Werkzeugs (3), und
die Abbildung über eine Anzeigeeinheit wiedergegeben wird, und wobei vorzugsweise
eine durch die Auswerteeinheit erzeugte Verschleißdokumentation und/oder Abbildung in einer Speichereinheit gespeichert wird, um sie zu einem späteren Zeitpunkt abrufen zu können, und bevorzugterweise
mit der Abbildung in Verbindung stehenden weiteren Informationen ebenfalls in der Speichereinheit gespeichert werden.

13. Verfahren nach Anspruch 12, wobei die Auswerteeinheit beim Abbildevorgang des Werkzeugs (3) Aufnahmen aus mehreren Perspektiven macht, insbesondere Aufnahmen aus verschiedenen Blickrichtungen auf eine Schneide des Werkzeugs (3) macht, um eine bessere Beurteilung des Verschleißes des Werkzeugs (3) zu ermöglichen.

14. Verfahren nach einem der vorhergehenden Ansprüche 12 oder 13, wobei die gespeicherten Abbildungen eines Werkzeugs (3) und die damit in Verbindung stehenden weiteren Informationen, wie Aufnahmezeitpunkt, aus der Abbildung abgeleitete Verschleißinformationen, die Standzeit des Werkzeugs (3) und/oder Motor- und Regelparameter des Bearbeitungskopfs (5), mit Hilfe von statistischen Verfahren ausgewertet werden, um Rückschlüsse auf das Maschinenverhalten und das Werkstoffverhalten des eingesetzten Werkzeugs (3) zu erhalten.

15. Verfahren nach einem der vorhergehenden Ansprüche 12 bis 14, wobei auf Grundlage der Abbildung eines Werkzeugs (3) auf deren Verschleißzustand geschlossen wird, vorzugsweise durch eine Rechnereinheit, und in Abhängigkeit davon ein Nachschleifen oder ein Austausch des Werkzeugs (3) durch einen Werkzeugwechsler (8), vorzugsweise vollautomatisch, vorgenommen wird.
